# EUROPEAN PATENT SPECIFICATION

(11) **EP 0 750 414 B1**
(45) Date of publication and mention of the grant of the patent: **01.12.2004**
(21) Application number: 96304413.6
(22) Date of filing: 13.06.1996
(51) Int. Cl.: H04M 11/06, H04L 27/00

(54) **Modulator and demodulator (MODEM)**
Modulator und Demodulator (Modem)
Modulateur et démodulateur (modem)

(30) Priority: 14.06.1995 JP 14723595; 11.01.1996 JP 285396
(43) Date of publication of application: 27.12.1996
(73) Proprietor: Panasonic Communications Co., Ltd., Fukuoka 812-8431 (JP)
(72) Inventor: Mizutani, Mikio, Koto-ku, Tokyo, 136 (JP); Noma, Nobuhiko, Yokohama-shi, Kanagawa 227 (JP); Katayama, Eizo, Yokohama-shi, Kanagawa 232 (JP); Takagi, Genzo, Urawa-shi, Saitama 366 (JP); Noguchi, Yoshihiro, Kawasaki-shi, Kanagawa 213 (JP); Araki, Mitsuhiro, Kawasaki-shi, Kanagawa 213 (JP)
(74) Representative: Crawford, Andrew Birkby

(56) References cited:
- EP-A- 0 499 763
- WO-A-92/11593
- US-A- 5 008 901

## Description

### BACKGROUND OF THE INVENTION

### Field of the invention

The present invention relates to a MODEM for data communication via a telephone line between Data Terminal Equipment(DTE) such as a computer and a facsimile apparatus, more particularly to a MODEM selecting an appropriate modulating method from a plurality of modulating methods.

### Description of the prior art

Several kinds of modulating methods are available in MODEMs such as frequency modulation, four-phase differential phase shift modulation, quadrature amplitude modulation, and phase amplitude modulation. Selection of these methods depends on a communication speed. Recently, many of MODEMs, for example a MODEM incorporated in a facsimile apparatus switch a modulation/demodulation mode as well as speeds depending on the protocol. It is crucially important to synchronize a timing of mode switch between a transmitter and receiver. In a conventional manner, DTE, a host apparatus of MODEM, selects an operation mode, and the MODEM follows an instruction from the DTE to switch the operation mode.

DTE is connected with MODEM via BUS, and CPU of DTE knows transmitted/received data by reading/writing the transmitting-data-register and receiving-data-register both are housed by the MODEM. Also the CPU recognizes the present operation of the MODEM by reading the status-displaying-register, and switches an operation mode of the MODEM by writing a mode number into the mode register. The modulating and demodulating portion in the MODEM follows an instruction from the mode register, and reports the status of each operation to the DTE via the status-display-register.

Before ITU (International Telecommunication Union) announced V.34 Standard based on ITU-T Recommendation, all the MODEMs used in the facsimiles were of half-duplex type, and no timing was available for transmitting a waveform simultaneously from both sides of transmitter and receiver. Only either one of the sides thus transmitted a waveform. Therefore, a sequence of signal-transmitting was determined by a protocol such as T.30 Standard.

An operation according to T.30 Standard is explained here:

A previous mode is a receiving mode, and the content of the received data is judged to switch the next mode into transmitting. In this case, DTE judges the received data and instructs the MODEM to switch the mode; however, software process in DTE takes time in anyway and produces a signal gap between the end of receiving signal and start of transmitting signal. When employing a half duplex communication, whatever the signal gap length may be, it will not be a cause of stopping the communication.

On the other hand, when the communication is operated based on V.34 Standard, the full duplex mode is employed only in communicating through a controlling channel, whereby signals are transmitted simultaneously from both sides. Accordingly, when the previous mode is ended in full-duplex mode of the controlling channel, and suppose the next mode is a receiving mode of a main channel. Then DTE is supposed to judge the data of controlling channel and give an instruction of mode switch to the MODEM.

A problem occurs in the above case: The timing of mode switch depends on an instruction from the DTE side. If processing the transmitted/received data would take time on the DTE side, the MODEM cannot receive the main channel, for the switching from the receiving of control channel of the previous mode to the receiving of main channel of the next mode delays. When a MODEM of a higher speed is employed, processing data volume per hour increases, whereby this kind of problems occur more often.

When the half-duplex MODEM of V.34 Standard is employed, the main channel of one-way communication and the controlling channel of two-way simultaneous communication are switched over alternately. In this case, if a signal gap spans over a specific period (0.1 seconds), an echo-suppressor is recovered, whereby the controlling channel cannot be through the two-way simultaneous communication, and the communication is thus unable to recover. In order to prevent this problem, V.34 Standard specifies the signal gap to be within 70 ms ± 5 ms.

Therefore, a mechanism which shortens the process time is required in an interface between the MODEM and DTE. However, if the process time can be shortened at the DTE side and switch timing can be spanned less period in proportion to the signal gap length, monitoring the signal gap length requires around ±5 ms accuracy. At the DTE side, a software for monitoring the MODEM status this requires a top priority, whereby the system design of DTE encounters the difficulty.

European Patent Publication 0 499 763 A1 discloses a data communication equipment (DCE) and a method for performing the processing of data into a DCE. The DCE includes a digital signal processor DSP for processing the data transmitted between a Data Terminating Equipment, DTE, and a telecommunication line, transmit and receive circuits being connected to the DTE interface.

### SUMMARY OF THE INVENTION

The present invention overcomes the problems proper to conventional methods, and shortens the process time of the interface between the DTE and MODEM as well as switches a mode independently of the DTE's software.

According to the present invention, from one aspect there is provided a MODEM which performs a modulator and demodulator, MODEM, for performing data-communication to and from a data terminal equipment, DTE, comprising:
a) a memory means for storing an object program about a process procedure;
b) a switching means for switching a mode in the unit of a prescribed process-procedure;
c) a control means for executing a process procedure corresponding to the mode just in operation
characterised in that the MODEM further comprises:
a timer means adapted to monitor a transition time between the ended process procedure and the starting of a next process procedure, and said MODEM is adapted to start the process of said specified mode based on the instruction set by the DTE as well as to monitor the transition time by using said timer means, and to execute the next specified mode when said timer means times out.

From another aspect the present invention provides a data communication equipment comprising a data terminal equipment, DTE, and a modulator and demodulator, MODEM, linked up with said DTE via a communication line, the MODEM including:
a) a memory means storing an object program about a process procedure,
b) a switching means for switching a mode in a unit if prescribed process-procedure in response to the execution of said object program, and
c) a control means for executing a process procedure,
characterised in that the MODEM further comprises:
a timer means adapted to monitor a transition time between the ended process procedure and the starting of a next process procedure, and said MODEM is adapted to start the process of said specified mode based on the instruction set by the DTE as well as to monitor the transition time by using said timer means, and to execute the next specified mode when said timer means times out.

The present invention has various embodiments for this basic structure. First, data storage areas which temporarily store the data transmitted to/from the host apparatus are provided to each operation mode. Accordingly, when the MODEM switches the modes by itself, received data is written into different areas in response to each mode. If a response speed cannot follow the MODEM's communication speed even in a moment, a received data of the next mode is stored in another area of the memory means, the received data of the next mode thus will not overwrite the counterpart of the previous frame.

In another embodiment, a data storage area comprises two areas in pairs corresponding to each operation, one is a command storage area storing commands from the data terminal equipment (DTE), and another is a data storage area storing data from the DTE. When a transmitted data in a data storage area is processed, a command written by the host apparatus into the corresponding command storage area is checked, and an operation follows the command.

Further in another embodiment, the data storage areas of each operation mode have plural banks, and data from the DTE is stored in each bank in the unit of frame. An error-check is conducted on the stored data from the DTE, and a "data error" is written into a status register, and then the received data which includes errors is cancelled. In this embodiment, the data-error is thus not written in the corresponding bank, and a memory capacity is utilised with less waste. Since the result of error-check, ie data-check, is still maintained, a notice can be given to the DTE that a data-error is produced.

In another different embodiment, a received data frame in the MODEM is deframed and analysed to judge whether the data frame is an RCP (return to control for partial page) frame or not. If the data frame is judged the RCP frame, the operation mode is automatically switched from the main-channel-receiving-mode to the controlling channel mode, whereby preventing to miss a control-channel-signal arriving within 75 ms after ending the main channel.

Further, in another separate embodiment, the MODEM calculates an error quantity, and specifies the acceptable maximum error quantity. When an error quantity exceeds this acceptable maximum error quantity, a retraining signal is sent to the communication line. The acceptable maximum error quantity may be instructed by the DTE. Therefore, in this embodiment, when quality of received data is even lowered during data transmission, load on the DTE can be reduced and also a quality level can be recovered quickly whereby a total communication can end quickly.

In a separate embodiment, the MODEM analyses the received data. If the analysis tells that there is an end signal of controlling channel of a special pattern which could not occur in data transmission, the MODEM switches automatically the operation mode from the controlling channel mode to the main-channel-receiving mode, whereby preventing to miss a main channel signal arriving with in 75 ms after ending the controlling channel.

Still in a separate embodiment, a timer is installed, which start counting a prescribed time simultaneously when the MODEM transmits a specified signal to the communication line. When a response signal to the specified signal during the prescribed time is detected, the timer is reset. If the response signal is not detected from the line during the specified time, the DTE is given a notice of abnormal. Therefore, in a normal operation where the response signal is detected from the line, the DTE needs not know about the detection of the response signal, whereby the process is never interfered. The load upon the DTE thus can be reduced comparing with when every monitor result is noticed to the DTE.

### BRIEF DESCRIPTION OF THE DRAWINGS

Fig. 1 is a block diagram depicting a MODEM according to an embodiment of the present invention.
Fig. 2 depicts a memory structure of a dual port RAM in Fig. 1.
Fig. 3 depicts a memory structure of a channel area required to access a channel block of the present invention.
Fig. 4 details a bit map in the channel command illustrated in Fig. 3.
Fig. 5 details a bit map in the channel status illustrated in Fig. 4.
Fig. 6 depicts a relation between command areas, status areas and banks on the dual port RAM.
Fig. 7 depicts a memory structure detailing a bit map in the command area of the present invention.
Fig. 8 depicts a memory structure detailing a bit map in the status area of the present invention.
Fig. 9 depicts a memory structure showing a transmission interrupt of the present invention.
Fig. 10 depicts a memory structure showing a receiving interrupt of the present invention.
Fig. 11 depicts a situation of error-frame being detected when a received data's frame is checked.
Fig. 12(a) depicts a conventional memory still storing an error-frame after being judged so.
Fig. 12(b) depicts a memory of this invention, which cancels an error-frame when being judged so.
Fig. 13 depicts when an abort is detected in received data.
Fig. 14(a) depicts a conventional memory still storing an error-frame after being judged so.
Fig. 14(b) depicts a memory of this invention, which cancels an error-frame when being judged so.
Fig. 15 is a control flow chart depicting an embodiment of mode switch according to this invention.
Fig. 16 is a receiving side's flow chart depicting a facsimile sequence using a half duplex mode of V.34 Standard according to this invention.
Fig. 17 depicts a mode switch by RCP detection of this invention.
Fig. 18 depicts a sample of timing used in facsimile/data communication in V.34 mode according to this invention.
Fig. 19 depicts a circuit of MODEM used in an embodiment of this invention.
Fig. 20 is an inner block diagram of EQM calculator showed in Fig. 19. (EQM: eye quality monitor)
Fig. 21 is a flow chart to be executed by the controller showed in Fig. 19 in data receiving mode.
Fig. 22 is a sequence diagram outlining a procedure of V.34 half duplex used in this invention.

### PREFERRED EMBODIMENTS

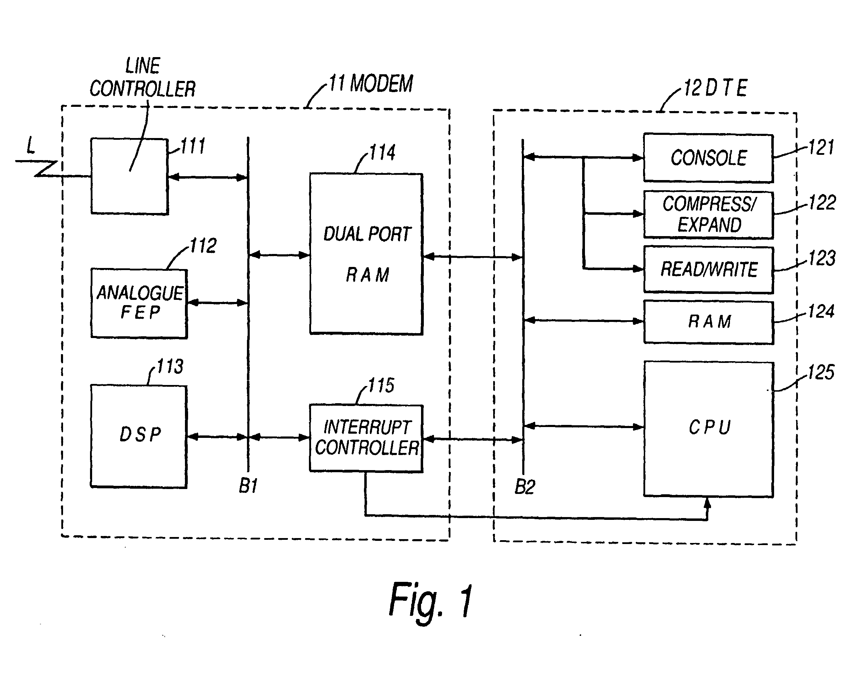

Fig. 1 is a block diagram outlining a MODEM used in this embodiment of the present invention. A MODEM 11 modulates and demodulates data. A facsimile controller 12 functions as a host DTE and processes data expansion and data record. The MODEM 11 comprises a line controller 111, an analog FEP 112 (FEP: front end processor), a DSP 113 (DSP:digital signal processor) which digitally processes modulation and demodulation etc., a dual port RAM 114 having two READ/WRITE access ports, and an interrupt controller 115.

The facsimile controller 12 comprises an image reader/ recorder 123, an image data compressor/expandor 122, a console 121 including a control panel, a working RAM 124 which temporarily stores image data, and a CPU 125 (central processing unit) which controls operation of the entire apparatus.

A first access port of the dual port RAM 114 is connected to a BUS B1 in the MODEM 11, and a second access port is connected to a BUS B2 in the facsimile controller 12, so that READ/WRITE from the MODEM 11 and facsimile controller 12 can be practiced simultaneously.

The present invention employs the dual port RAM 114 to be disposed between the DTE and MODEM in order to increase data-transmit-efficiency of the interface between the DTE and MODEM as well as reduces time-load on software at the DTE side: The dual port RAM 114 can transmits data in a unit of data-frame which is an error detecting unit. A buffer area of the frame unit is not limited to one frame but extends to a block area linking plural frames (hereinafter called as a channel block.)

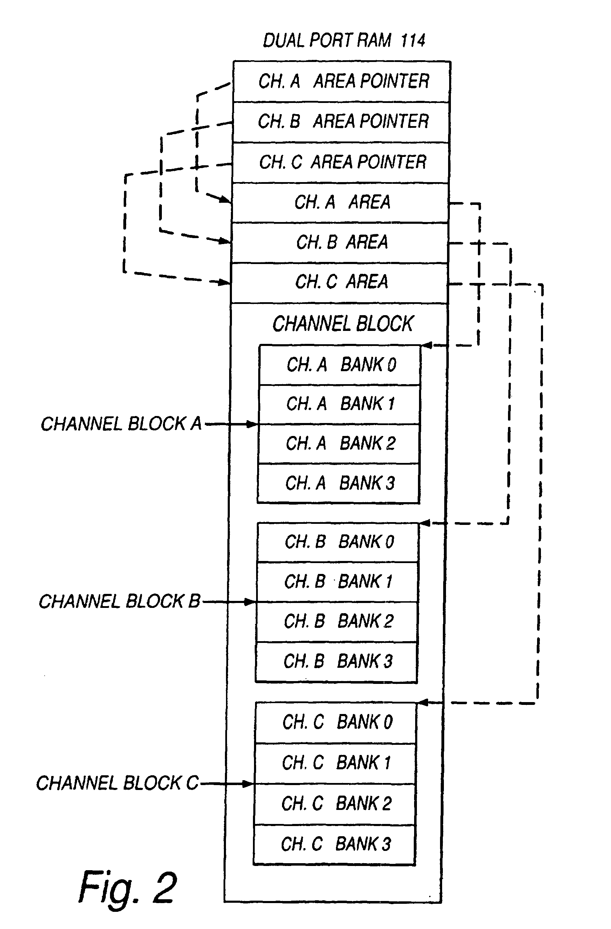

Fig. 2 depicts a memory structure of the dual port RAM 114 shown in Fig. 1. A communication buffer is independently provided to each mode, such as a channel block A to the main channel, a channel block B to the transmitter controlling channel, a channel block C to the receiver controlling channel. Each communication buffer has plural banks 0 - 3. The channel blocks A, B, and C have channel area pointers (CH area pointer) and channel areas (CH area). The CH area pointers have information for accessing the CH area.

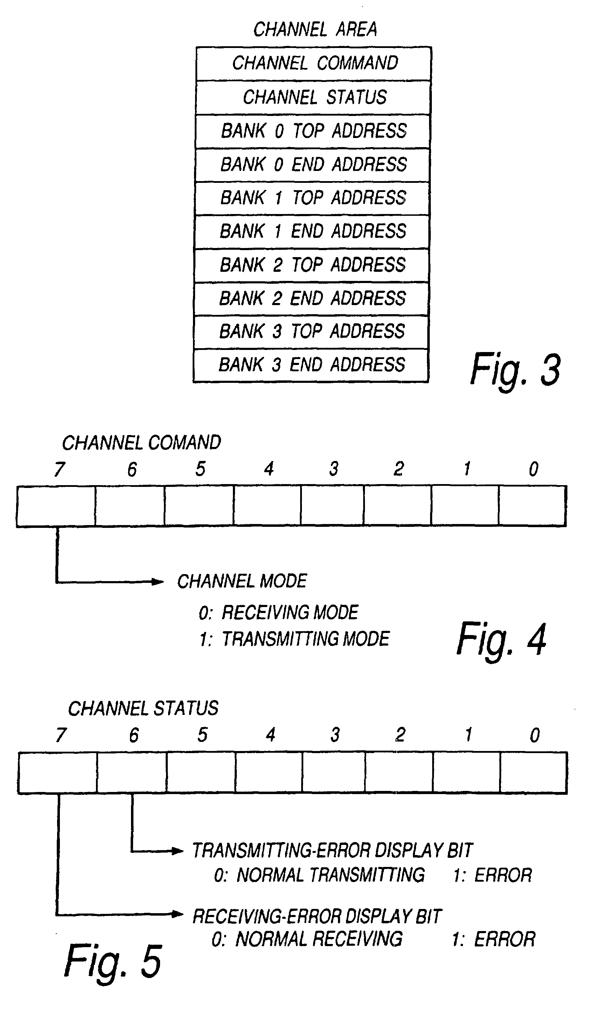

Fig. 3 depicts a memory structure required for accessing the channel blocks. A channel command is an area for storing a command which switches a corresponding channel to transmitting mode or receiving mode. A channel status is an area to display the information about an error in transmitting/receiving of the corresponding channel.

Fig. 4 details an example of a bit map in the channel command shown in Fig. 3.

Fig. 5 details an example of a bit map in the channel status shown in Fig. 3.

The MODEM 11 so structured as above is explained here when V.34 half duplex is used in a communication:

An embodiment here shows how to control received data from the facsimile controller 12 independently in each mode.

When communicating by using V.34 half duplex, a channel of communication comprises a main channel and a controlling channel. The main channel is used for image information in the facsimile communication, and the controlling channel is used for the communication of Phase B control information recommended in T.30 Standard of ITU-T. The main channel uses the channel block A, transmitting of the controlling channel uses the channel block B, and receiving of the controlling channel uses the channel block C.

First, a transmiting-process of controlling channel is described: In Phase B of T.30 Standard, the MODEM 11 sets the channel mode of channel block B at "bit 1" in order to transmit the controlling channel. Data is written into the bank 0 of channel block B. The MODEM 11 recognizes the "bit 1" of Data Full /Empty, confirms the ending of WRITE, reads the data from Bank 0, processes signals including modulation, and transmits data to the communication line. After transmitting data out of Bank 0, the MODEM 11 changes the display bit of Data Full/Empty of Status 0 to "0".

When the display bit of Data Full/Empty of Status 1 which corresponds to Bank 1 is "0", the facsimile controller 12, on the other hand, writes the next data-frame into Bank 1 while the MODEM 11 transmits the data of Bank 0. After completing WRITE, the display bit of Data Full/Empty of Status 1 is changed to "1". The MODEM 11 checks Status 1 after completing the transmission of Bank 0, and when the display bit of Data Full/Empty is "1" (in other words, the next data-frame was written-in already), the data of Bank 1 is transmitted as same as Bank 0. In the same manner, Bank 2, 3, and 0 in this sequence are transmitted in the unit of data-frame. Although the transmitting command of controlling channel is in execution, when the display bits of Data Full/Empty of Bank status in all Banks are at "0" and no data-frame to be transmitted is available, the MODEM changes transmitting-error-display-bit of channel status B into "1" and gives a notice of an transmitting error of channel block B to the facsimile controller 12.

Second, the receiving process of controlling channel is described: The MODEM 11 sets a channel mode of channel command C at "0" in order to receive the controlling channel, and the MODEM 11 receives as well as demodulates data, confirms that the display bit of Data Full/ Empty of Status 0 which corresponds to Bank 0 of channel block C is "0", and writes one data frame into Bank 0. After completing the write-in, the display bit of Data Full/Empty of Status 0 is changed to "1" (Completing WRITE = READ Ready.) The facsimile controller 12 confirms that the display bit of Data Full/Empty of Status 0 is "1", then reads data out of Bank 0. When the display bit of Data Full/Empty of Bank 1 is "0", the MODEM 11 writes the next data-frame of receiving into Bank 1 while data of Bank 0 is read by the facsimile controller 12. In the same manner, Bank 2, 3 and 0 in this sequence are received and processed in the unit of data-frame.

Although the receiving command of controlling channel is in execution, when the display bits of Data Full/Empty of Bank status in all Banks are at "1" and no received data-frame can be written into vacant banks of C channel block, the MODEM 11 changes the receiving error display bit of channel status C into "1", and gives a notice of a receiving error of channel block C to the facsimile controller 12.

As described above, transmitting/receiving of controlling channel is processed by using channel blocks B and C. Therefore, even if the receiving/transmitting of controlling channel is operated in full-duplex-simultaneous-mode under V.34 half duplex Standard, the MODEM and facsimile controller do not require complicated processes, but can deliver the transmitted/received data of controlling channel safely. The transmitting/receiving uf the main channel works same as that of the controlling channel. Namely, setting a channel-set-mode-bit of the channel command in channel block A at "1" can switch to the transmitting mode, and setting the channel-set-mode-bit of channel block A at "0" can switch to the receiving mode. The transmitting/receiving operation of the main channel can be thus practiced.

Further in V.34 half duplex Standard, a mode switch such as from transmitting/receiving operation of controlling channel to transmitting or receiving operation of the main channel, or vice versa can be executed.

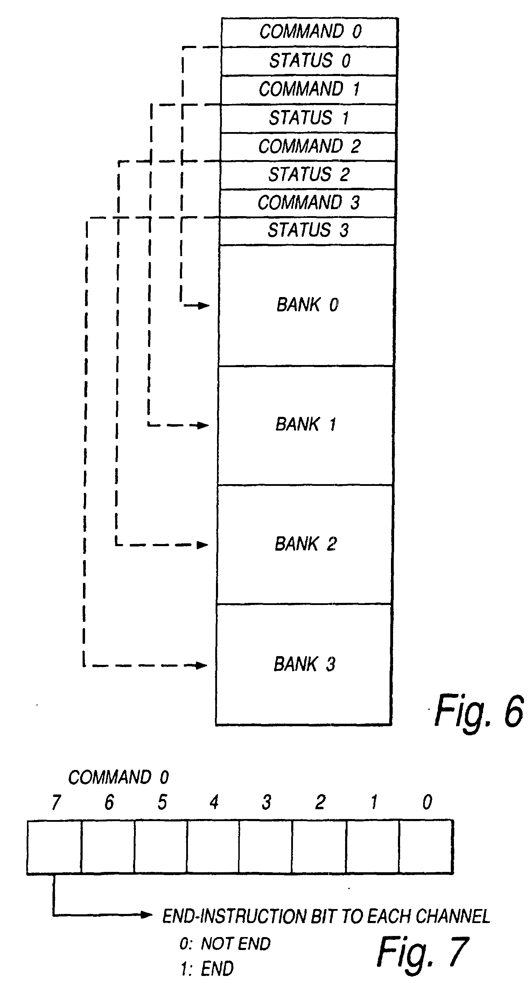

Third, a process of stpp the transmitting of data is explained by referring to Fig. 6 - 10. Fig. 6 depicts the relation between the command areas, status areas and banks on the dual port RAM 114. The command areas store instructions about operations sent from the DTE such as channel ending, etc. The status areas store the information about buffer's status such as display of Data Full/Empty, aborts and errors. These areas are provided to each bank in order to strictly control the ending of the processes when each bank completes to transmit data. Each bank stores data in the unit of data-frame which is the unit of error-detection.

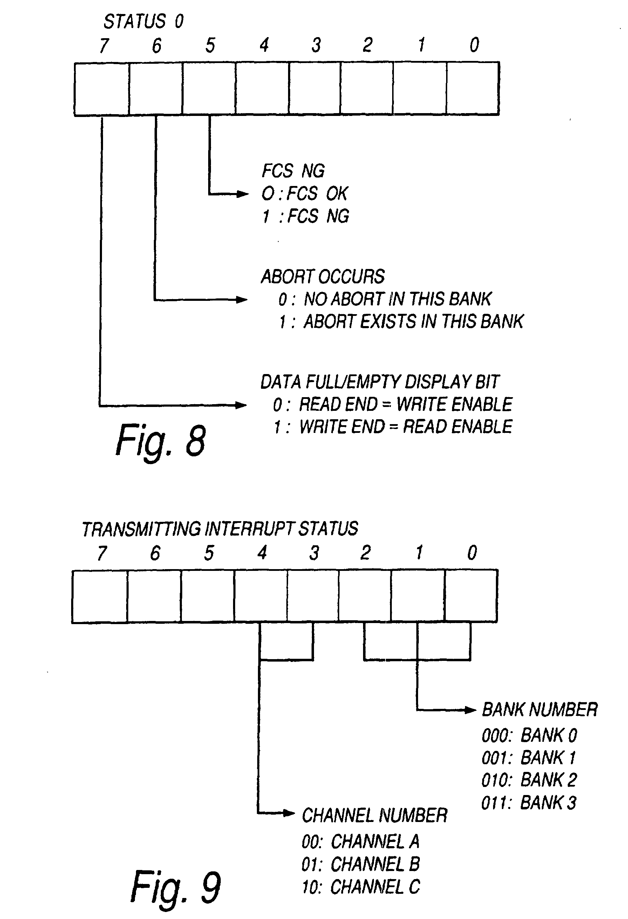

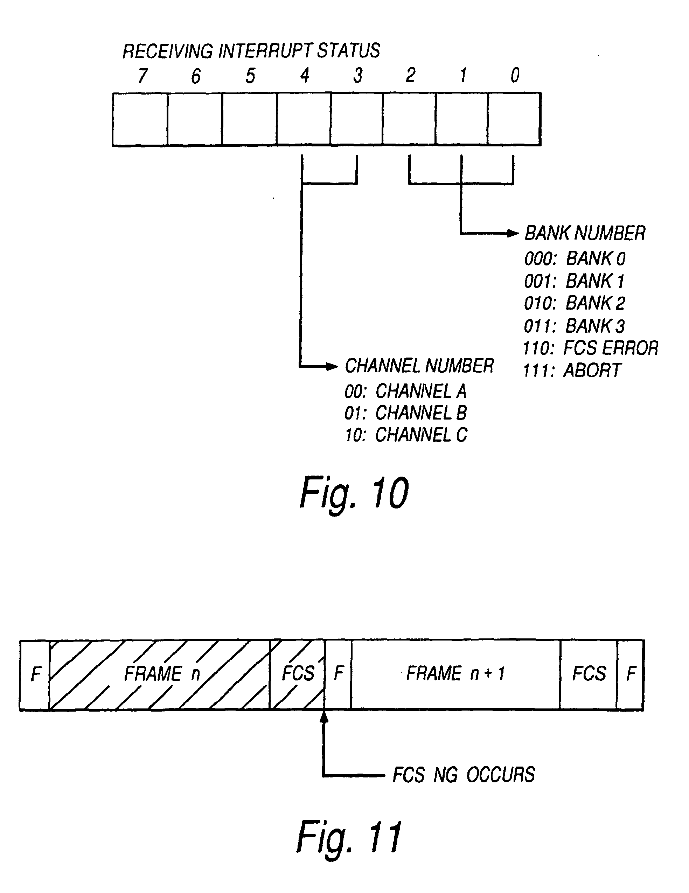

Fig. 7 details a bit-map in the command area, and Fig. 8 details a bit-map in the status area. These drawings show the command area and status area corresponding to Bank 0. The same manner can be applied to Bank 1, 2 and 3. Fig. 9 depicts a memory structure showing an interrupt in transmitting. Fig. 10 is a memory structure showing an interrupt in receiving.

Fourth, an operation of the above structure is explained: Regarding the data transmitting process, e.g. Channel A among plural channels is used, the facsimile controller 12 confirms that the display bit of Data Full/Empty of Status 0 is "0", and writes one data-frame of transmitting into Bank 0. When completing the write, the facsimile controller 12 changes the ending-channel-instruction-bit to "0" (not end), and changes the display bit of Data Full/Empty of Status 0 to "1" (WRITE end = READ enable).

When the MODEM 11 recognizes the ending-channel-instruction-bit of Command 0 is "0" and the display bit of Data Full/Empty of Status 0 is "1", the MODEM 11 reads data out of Bank 0 to process signals such as demodulation, and transmits data to line L. When completing to transmit the data out of Bank 0, the MODEM 11 changes the display bit of Data Full/Empty of Status 0 to "0", then simultaneously the interrupt controller 115 produces an interrupt in the facsimile controller 12.

The facsimile controller 12 inspects a transmit-interrupt shown in Fig. 9, thereby notices that the MODEM 11 completed to read the data out of Bank 0. When the display bit of Data Full/ Empty of Status 1 corresponding to Bank 1 is "0", the facsimile controller 12, on the other hand, writes the next data-frame into Bank 1 while the MODEM 11 transmits the data of Bank 0. After completing WRITE, the ending-channel-instruction-bit of Command 1 is changed to "1". The MODEM 11 checks Status 1 after completing the transmission of Bank 0, and when the display bit of Data Full/ Empty is "1" (in other words, the next data-frame was written-in already), the data of Bank 1 is transmitted as same as Bank 0, and if there is no ending-channel-instruction, the MODEM 11 moves to the next Bank. In the same manner, Bank 2, 3, and 0 in this sequence are transmitted in the unit of data-frame. When ending data-transmitting (channel A), a data-frame is written into e.g. Bank 3, the display bit of Data Full/Empty of Status 3 is changed to "1", and simultaneously the ending-channel-instruction-bit of Command 3 is changed to "1", thereby the MODEM 11 is given an ending notice. The MODEM 11 checks Status 3 and Command 3 at the same time, whereby recognizes that the display bit of Data Full/ Empty is "1" as well as the ending-channel-instruction, then ends the data transmitting process after transmitting the Bank 3 data.

Fifth, a data receiving process is explained here: The MODEM 11 demodulates the received data, and recognizes the display bit of Data Full/Empty of Status 0 is "0" to write one data-frame into Bank 0. When completing WRITE, the MODEM 11 changes the display bit of Data Full/Empty of Status 0 to "1" (WRITE end = READ enable.) The interrupt controller 115 produces an interrupt on the facsimile controller 12.

The facsimile controller 12 inspects a receiving-interrupt-status, and recognizes that data has been written into Bank 0. When receiving one data-frame, the MODEM 11 checks whether an abort occurs or not, inspects a frame-check-sequence which is added to the frame-end, and judges whether an error exists or not. The judgment is displayed on the receiving-interrupt-status. After confirming no abort exists in the receiving-interrupt-status and also no error in the data-frame, the facsimile controller 12 reads data out of Bank 0. When the display bit of Data Full/Empty of Bank 0 is "0", the MODEM 11 writes the next data-frame into Bank 1 while the data of Bank 0 is read by the facsimile controller 12. After completing WRITE, the data written into Bank 1 is read by the facsimile controller 12, same as the data in Bank 0. In the same manner, Bank 2, 3 and 0 in this sequence are processed for receiving in the unit of data-frame.

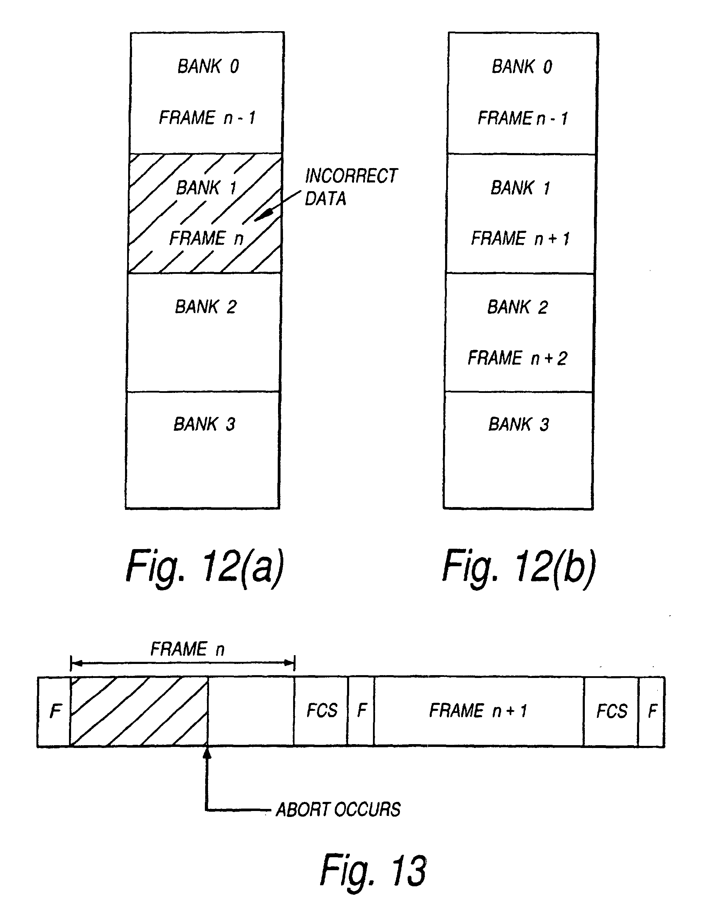

When an error occurs in data-frame or an abort is detected due to line interference in receiving data, how to cancel an error frame is explained by referring to Fig. 11 through Fig. 14: Fig. 11 depicts a status of an error frame being detected when receiving data-frame is checked. Fig. 12(a) depicts a memory where an error-frame is still conventionally stored even the frame has been judged to be an error-frame. Fig. 12(b) depicts a memory where an error-frame is canceled according to this invention.

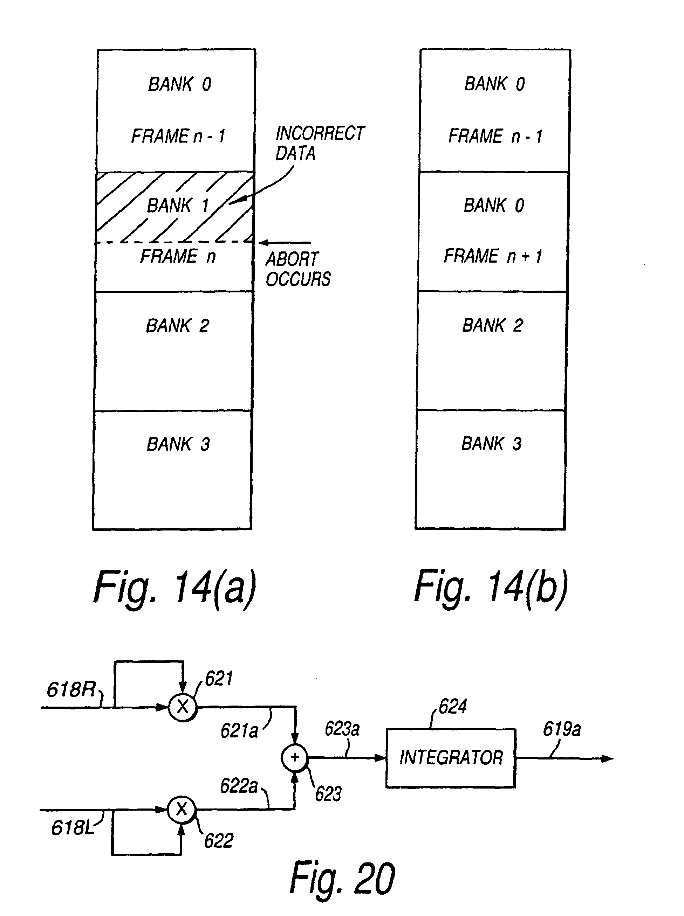

Fig. 13 depicts a received data where an abort is detected. Fig. 14(a) depicts a memory where the abort frame is still conventionally stored even the frame has been judged having an abort. Fig. 14(b) depicts a memory where the abort frame is canceled according to this invention.

When an error is detected by an error-detecting-signal (frame-check-sequence-error), a frame n (error-frame) is written into Bank 1, and an interrupt is produced in the facsimile controller 12 by the interrupt controller 115. The facsimile controller 12 inspects the receiving-interrupt-status to find that the data has been written into Bank 1 as well as the frame-check-sequence-error has been produced also in Bank 1. The facsimile controller 12 does not read because the data in Bank 1 has an error, and waits the next data-frame.

When receiving the next data-frame n+1, the MODEM 11 does not write it into Bank 2 but writes it into Bank 1 again as shown in Fig. 12(b). When WRITE is completed, an interrupt is produced on the facsimile controller 12 by the interrupt controller 115. When receiving the interrupt, the facsimile controller 12 inspects the receiving-interrupt-status to find that the next data-frame n+1 has been written into Bank 1, and practices a receiving process. When the abort occurs, same procedures are taken as shown in Fig. 13 and Fig. 14(b).

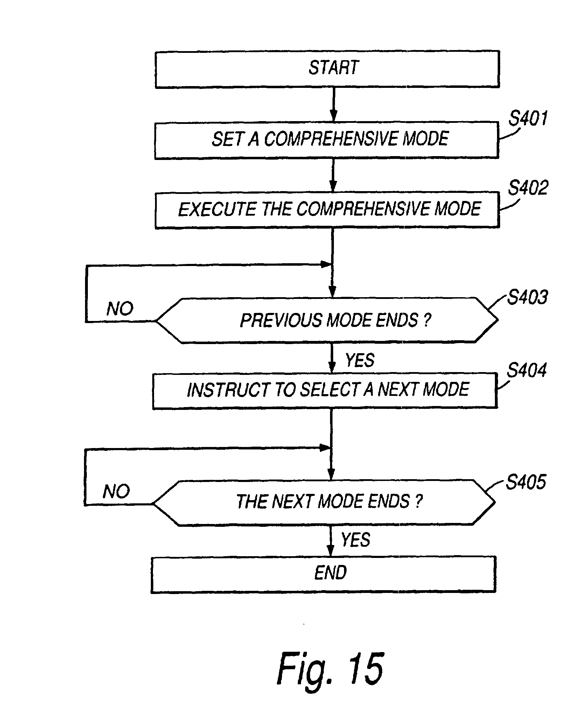

A mode switch process, the MODEM 11 executes the mode by itself, is explained here by referring to Fig. 15 through Fig. 17. Fig. 15 is a control flow chart depicting an embodiment of this mode switch process according to this invention.

First, the facsimile controller 12 sets a comprehensive mode (S401) which can control a previous and next modes in sequence. Second, the MODEM 11 follows an instruction of executing the comprehensive mode (S402) from the facsimile controller 12, and executes S401 to start processing the previous mode. The facsimile controller 12 then waits for a notice from the MODEM 11 that the previous mode is ended (S403.) When the previous mode is ended, the MODEM 11 gives a notice of ending the previous mode to the facsimile controller 12, and the MODEM 11 sets a timer by itself and monitors a transit time before the next mode is started. When receiving the notice of ending the previous mode, the facsimile controller 12 selects one mode among several modes and instructs the MODEM 11 to execute it in the next mode (S404), then waits for a notice of ending the next mode from the MODEM 11 (S405).When the timer is out, the MODEM 11 executes the selected mode and monitors the status before giving a notice of ending the next mode to the facsimile controller 12. When receiving the notice of ending the next mode, the facsimile controller 12 ends the sequence of the comprehensive mode.

As explained above, according to this invention, the MODEM 11 automatically executes the mode switch process by simply following the instruction of mode setting from the facsimile controller 12, and there is no need to wait for a mode-switch-instruction or process- start-instruction from the facsimile controller 12. This invention thus prevents a response delay to the next mode even in the procedure where ±5 ms accuracy is required for monitoring the signal-gap-length.

In other words, if the MODEM stores a communication sequence beforehand and the comprehensive mode is set to identify which mode is to be executed, the MODEM can execute the process by itself by controlling a status transition.

Also, according to this invention, the MODEM monitors the timing required until the next mode starts, thereby a delay of switching to the next mode can be avoided even if the case requires ±5 ms accuracy in monitoring the signal-gap-length.

As shown in Fig. 15, this invention proves the following merits: When the process of the previous mode ends at S403, the MODEM 11 controls a status-transition by itself and also the next mode is set at S404 by the instruction of selecting the next mode, and thereby a timing for mode-switch is guaranteed to secure a safety communication. Further, the MODEM can monitor the timing instead of the facsimile controller 12, whereby reducing the load from the facsimile controller 12.

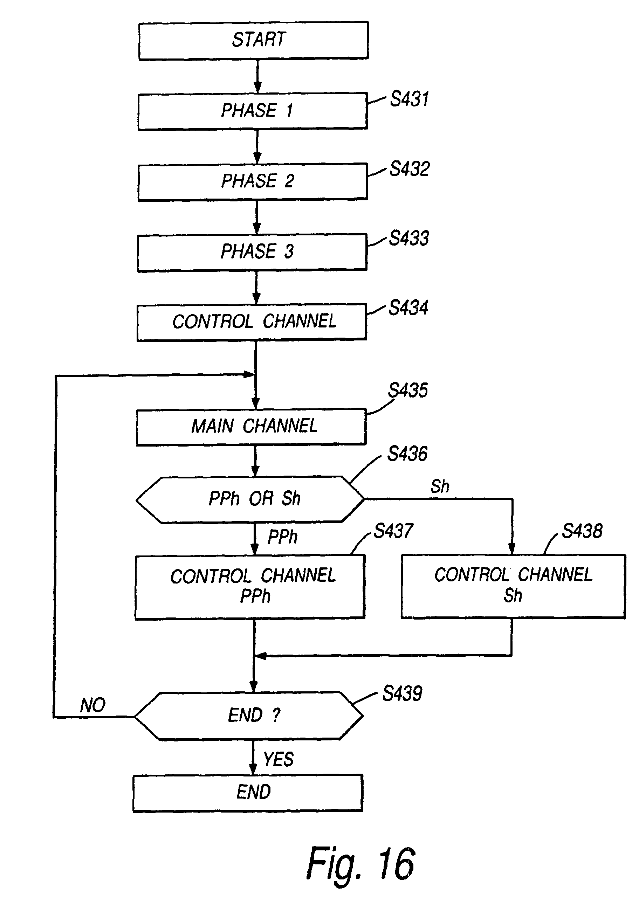

Various mode-switches by the MODEM are explained. Fig. 16 depicts a meaning that the MODEM 11 has several operation-modes and another operation mode having a sequence which controls the several operation-modes. Fig. 16 is a flow-chart of facsimile sequence using the half-duplex V.34 Standard based on ITU advice. Phase 1 (S431), Phase 2 (S432), Phase 3 (S433), the controlling channel (S434) and the main channel (S435) are the modes in the sequence. The MODEM 11 has the half-duplex mode of V.34 Standard into which these modes are collected.

A MODEM mode is set at V.34 half-duplex mode before the operation is started. Phase 1 of Step S431 starts, where an adjustment is made so that the data based on V.34 Standard can be transmitted/received. When Step S431 is completed, the MODEM 11 transfers to Phase 2 of Step S432 to learn line's characteristics and determines a symbol speed of the MODEM. At Step S433, the MODEM comes into Phase 3 where an equalizer-training (set a coefficient in order to figure out distortion components) to MODEM 11 is provided. After Phase 3, the MODEM comes into Step S434, the controlling channel, where a data speed is determined and terminal information of T.30 Standard is exchanged.

When the controlling channel ends, the MODEM comes into Step S435, the main channel, where image data of the facsimile is transferred. When the main channel ends, the MODEM stays in Step S436 to determine which way to go: by an instruction of facsimile controller 12, to Step S437, the controlling channel which resets a data-speed, or to Step S438, the controlling channel which does not reset a data- speed. For this, the facsimile controller 12 gives an instruction to the MODEM 11 to determine which way to go, Step S437 or S438, before ending the main channel in Step S435.

The MODEM 11 in Step S439, after moving to either Step S437 or Step S438, determines whether the operation ends or not. When the operation does not end, the MODEM returns to Step S435, the main channel, and when the operation ends, the MODEM ends the operation. A non-signal period between Phase 1 and Phase 2 is 75±5 msec, and other non-signal periods between any modes last 70±5 msec. If the facsimile controller 12 controls them, the facsimile controller 12 must bear a heavy load. According to this invention, the MODEM controls them in lieu of the facsimile controller 12 so that the load on the facsimile controller 12 can be reduced.

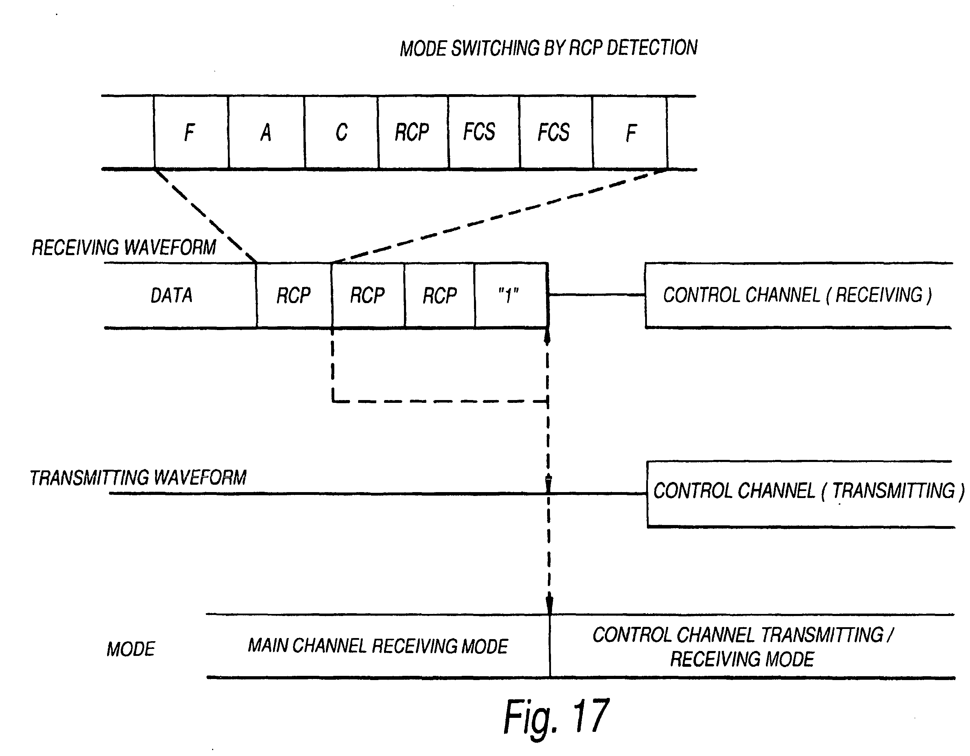

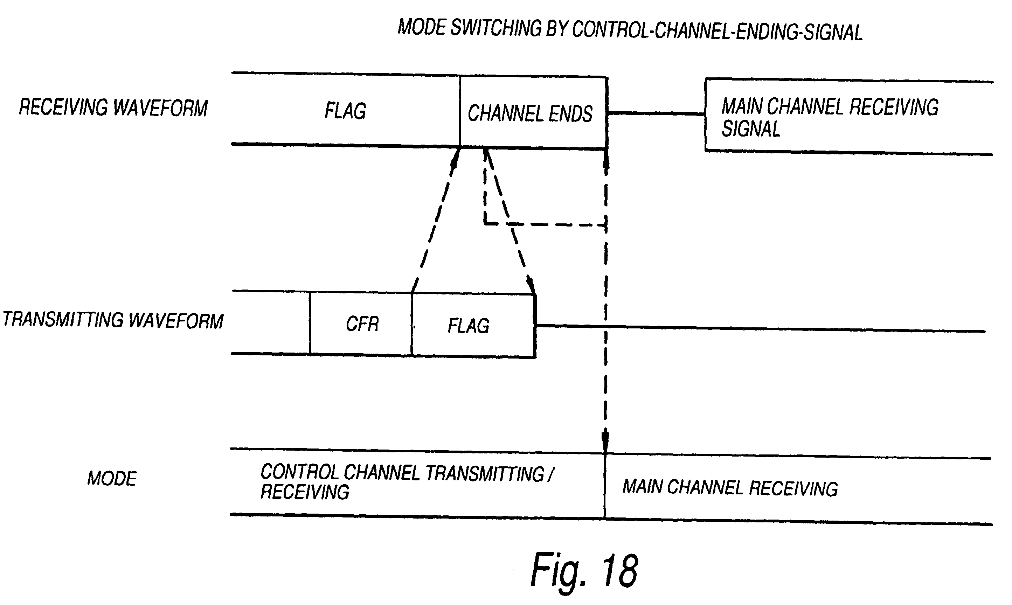

The above description is for the MODEM 11 to switch the modes by itself (the main channel, transmitting the controlling channel, and receiving the controlling channel.) By referring to Fig. 17 and Fig. 18, an explanation is referred to that the MODEM 11 by itself detects the end of mode shown in S403 and S405 in Fig. 15. Fig. 17 depicts MODEM mode switching by RCP detection.

This is an example when a facsimile communication or data communication is executed in accordance with V.34 Standard. Fig. 17 shows a timing of mode switching from the main channel upon its completion to the controlling channel mode. Since the facsimile/ data communication based on V.34 Standard is operated in ECM mode (error correction mode) whose premise is "error-retransmitting", it is certain that the main channel is to end with an RCP frame which is an end signal of a partial page. If the MODEM can judge the RCP frame in the MODEM, and can switch a mode to the control mode, the MODEM never misses the controlling-channel-signal arriving within 75 ms after the main channel ends. Inside of RCP frame is structured by HDLC-method-framing, and the MODEM 11 must have an ability to execute a deframing operation. After deframing, if data is judged correct, it is easy to judge RCP BYTE.

Another embodiment for the MODEM 11 to switch a mode by itself is explained by referring to Fig. 18. Fig. 18 shows an example of timing in which a facsimile/data communication in accordance with V.34 Standard is operated. In particular, it shows the timing with which the controlling channel mode upon completion is switched to the main channel receiving mode.

Regarding the end of controlling signal, the channel ending signal is specified by a rule of protocol. In this case also, the ending of channel is judged by the MODEM 11 by itself rather than by the facsimile controller 12, thereby switching the mode into the main receiving mode. To be more specific, the channel ending signal is other than nothing to receive "1" consecutive in not less than 40 bits, which can be detected in the MODEM.

As explained above, the MODEM 11 analyzes the received data by itself, and when the analysis tells that the specified signal has been detected, the MODEM switches a mode based on the result of the detection. The MODEM thus never misses a timing of switch and can guarantee an error-free communication.

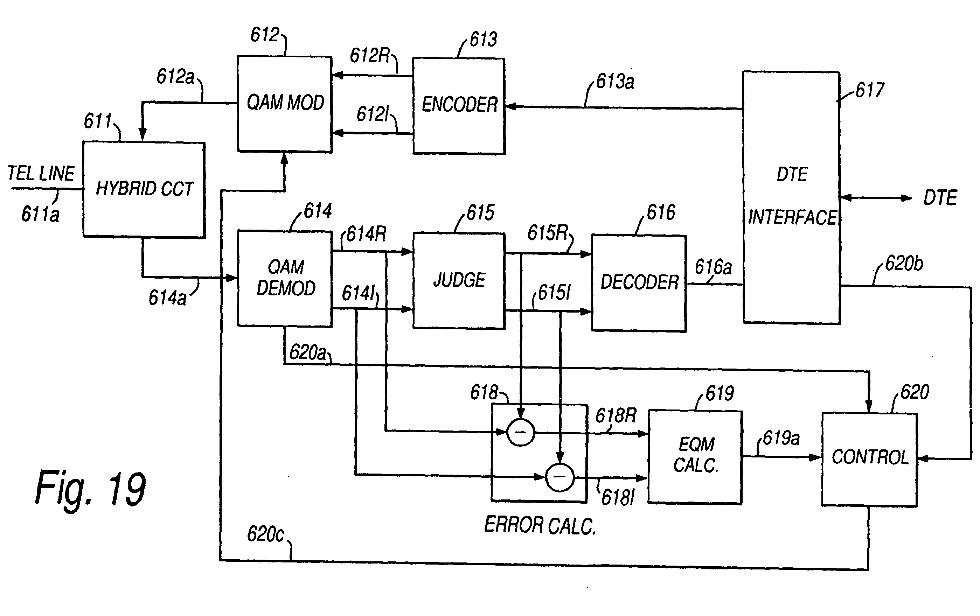

Fig. 19 through Fig. 21 depict an instruction process that the MODEM 11 instructs by itself the facsimile controller 12 in a retraining. Fig. 19 is a circuit diagram of MODEM 11, which shows an embodiment of this invention. In Fig. 19, a DTE-interface 617 controls data-transmission such as transmitted/received data as well as other data including instructions of modes, operations, etc. between DTE and MODEM. A transmitted data 613a is sent from the DTE to the other party of communication via the DTE-interface 617. A received data 616a is transmitted from the other party to DTE via the DTE-interface 617. An EQM threshold-value-signal 620b is determined as a reference value for judging a retraining control of MODEM by DTE via the DTE-interface 617. An encoder 613 transduces the transmitted data 613a into two-dimensional-signals 612R and 612I. A QAM modulator 612 provides quadrature amplitude modulation to the two dimensional signals.

The QAM modulator 612 is controlled so that the following signals are output as a modulating signal 612a in response to the status of a control signal 620c:

In the case of 620c = 0, no signal
620c = 1, quadrature amplitude modulation signal of the two dimensional signals 612R and 612I
620c = 2, training signal
620c = 3, retraining signal
620c = 4, response signal of retraining

A hybrid circuit 611 separates the signals of transmitting system from those of receiving system. This hybrid circuit sends out the transmitted signal 612a to a telephone line 611a, and outputs a received signal 614a from the other party.

A QAM demodulator 614 has two functions, one provides quadrature amplitude modulation to the received signal 614a to output two-dimensional-signal 614R and 614I, the other outputs a judgment of the received signal 614a to a judging signal 620a. The QAM demodulator 614 outputs as follows in response to the status of received signal 614a:
When received signal 614a = no signal, 620a = 0
= data receiving signal, 620a = 1
= training signal, 620a = 2
= retraining signal, 620a = 3
= retraining signal, 620a = 4

A judging part 615 judges the two dimensional signals 614R and 614I. The judged signals 614R and 614I are tapped off from the judging part 615.

A decoder 616 transduces the judged two dimensional signals 615R and 615I into the received data 616a. An error counter 618 subtracts output signals 615R of judging part 615 from the output signal 614R of QAM demodulator 614, and also subtracts the output signals 615I of the judging part 615 from the output signal 614I of the QAM demodulator 614, then outputs two-dimensional-error-signal 618R and 618I. The EQM calculator 619 calculates a power of the two-dimensional-error-signals 618R and 618I, and then outputs its signal as an EQM signal 619a representing a quality of received data. A controller 620 receives an input consisting of three signals, namely, the EQM signal 619a, the EQM threshold value 620b which is a reference value for retraining, the identifying signal 620a which identifies the received signal, and outputs the control signal 620c to the QAM modulator 612.

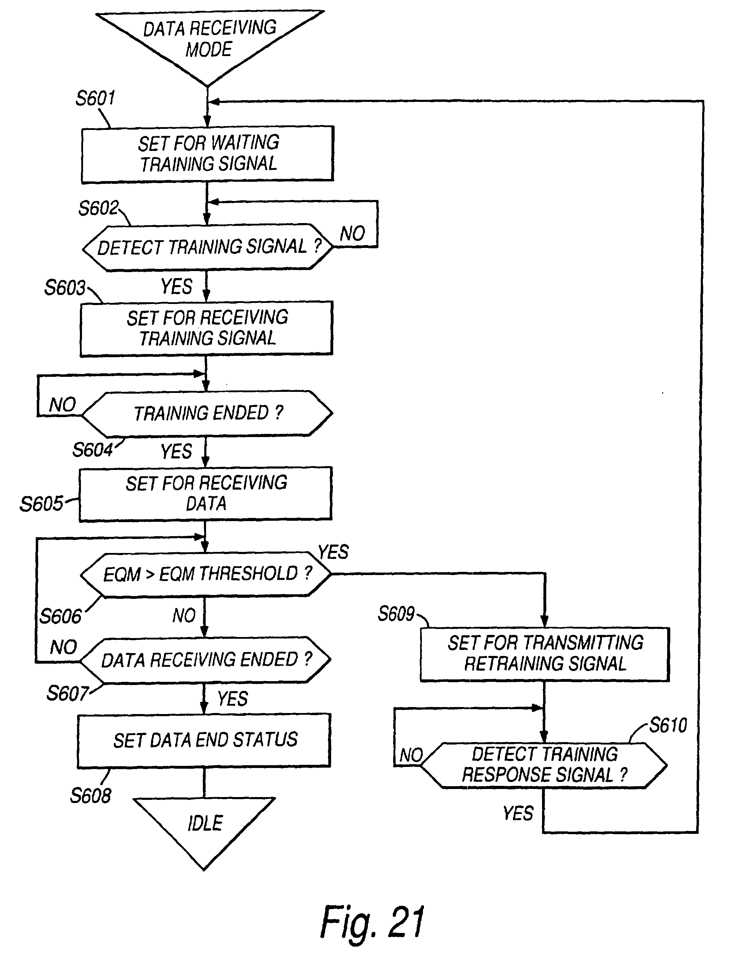

Fig. 20 is a block diagram of inside the EQM calculator 619. Multipliers 621 and 622 square the two-dimensional-error-signal 618R and 618I respectively. An adder 623 adds the signals sqaured by the multiplier 621 and 622 and outputs a power signal 623a of the two-dimensional-error. An integrator 624 smoothes the power signal 623a of two-dimensional-error, and outputs the EQM signal 619a representing the quality of receiving data.

Fig. 21 is a flow chart which should be executed in data-receiving-mode by the controller 620 shown in Fig. 19. Step S601 sets the MODEM in waiting status for the training signal to be detected, and sets the signal 620c to "0" for the QAM modulator 612 to send no signal. Step S602 judges whether the MODEM 11 detects the training signal sent from the MODEM of the other party of the communication or not. When S602 judges "detected", the operation moves to S603, and when "not detected yet", the operation repeats the step S602. When a signal 620a changes to "2", the training signal is judged to be detected. In the step S603, the MODEM is set in training-signal-receiving-status. In step S604, the controller 620 judges whether the training-signal-receiving ends or not. When the training-signal-receiving ends, the operation moves to S605, and when not ends, S604 is repeated. When the signal 620a changes from "2" to "1", the training-signal-receiving is judged to end.

In step S605, the MODEM is set in receiving status, where receiving data is transmitted to the DTE via the QAM demodulator 614, judging part 615, decoder 6161 and DTE-interface 617. Step S606 judges whether the EQM signal 619a representing the quality of receiving data exceeds the EQM threshold value 620b or not. When the EQM signal 619a exceeds the threshold value 620b, the operation moves to step S609, and when the threshold value 620b exceeds the EQM signal 619a, the operation moves to step S607.

Step S607 judges whether data-receiving ends or not. When the data-receiving ends, the operation moves to Step S608, and when not ends, the operation returns to Step S606. The criteria of this judgment whether the data-receiving ends or not is this: when signal 620a changes from "1" to "0", and when an "end" is instructed by the DTE via the DTE-interface 617.

Step S608 sets the MODEM in data-ending status, and stops the received data to be transmitted to the DTE via the DTE-interface 617, and then moves to an idle mode. Step S609 sets the MODEM in retraining-signal-transmitting status, changes the signal S620c to "3", transmits the retraining signal from the QAM modulator 612, and moves to Step S610. At this moment, the operation temporarily stops the receiving data being transmitted to the DTE via the DTE-interface. Step S610 judges whether the MODEM 11 detects a retraining response signal from the MODEM of the other party of the communication or not. When "detects", the operation moves to Step S601, and when "not detects", the operation repeats Step S610. A criteria of the judgment is this: when the signal 620a changes to "4", it is judged that the retraining signal is detected.

In the above embodiments, retraining is controlled by both the EQM threshold value set by the DTE and the EQM value by the MODEM 11. However, this invention is not limited to these embodiments, but has other structures for controlling the training. For example, a frame-error or bit-error is monitored in the MODEM, and DTE sets a threshold value to the monitoring, thereby the training is controlled. According to the above embodiments, the DTE instructs the EQM threshold value. However, the EQM threshold value may be held by the MODEM before-hand instead.

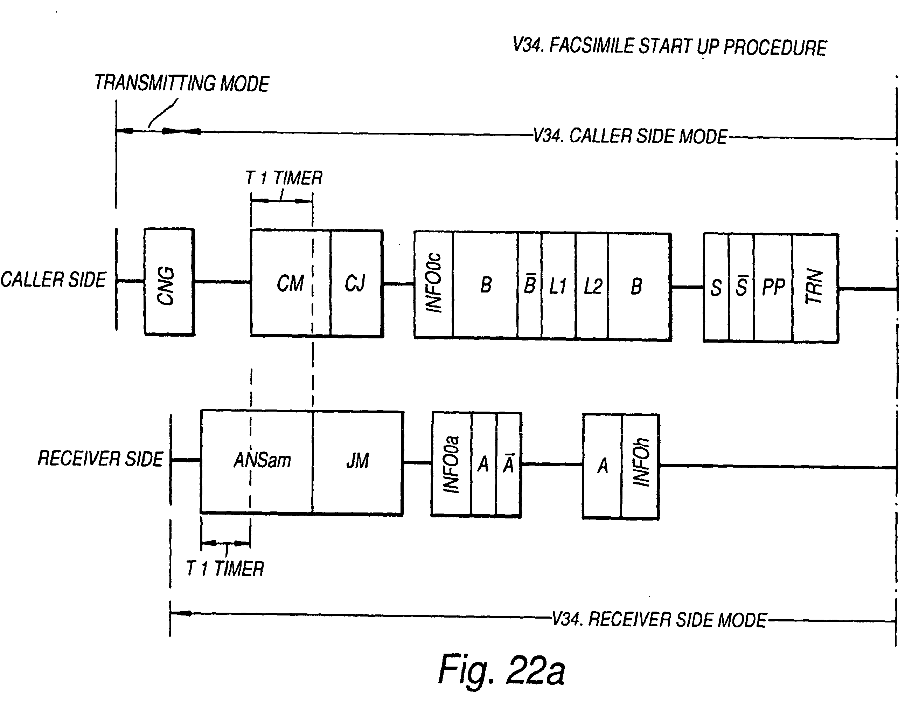

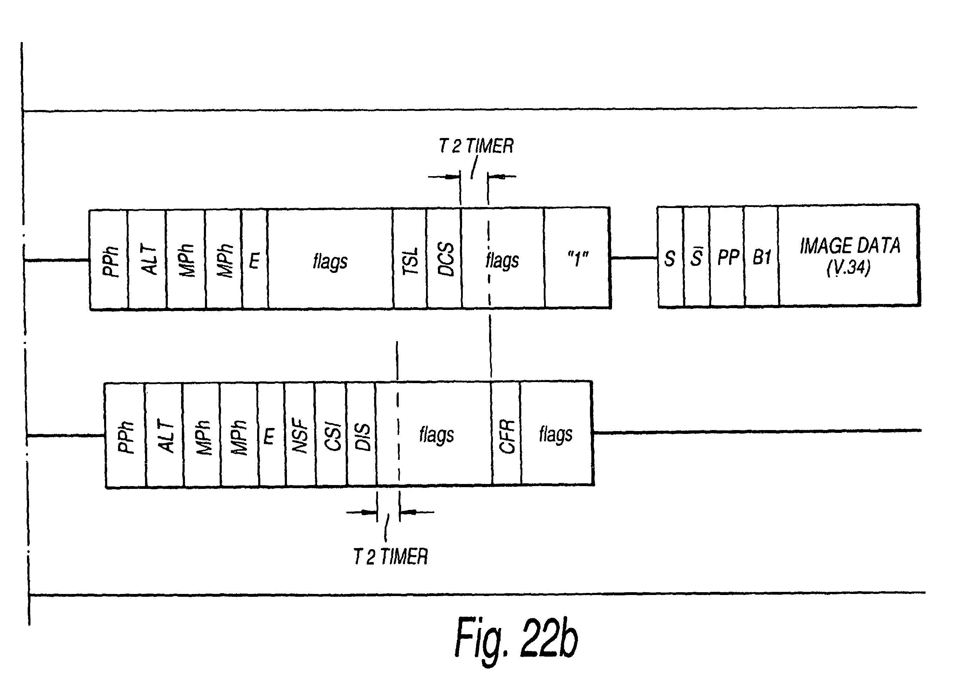

Next, a process of monitoring the timing by the MODEM is explained. Fig. 22 is a sequence diagram outlining the procedure of V.34 Standard half-duplex mode. First, a timer T1 works as follows: On the receiver side, when the transmitting of ANSam signal starts, at the same time, decrement of the time (e.g. 35 seconds) set in the timer T1 starts. If the timer T1 counts down to "0", the MODEM 11 gives a notice of abnormal by producing an interrupt to the DTE side. However, when a CM signal from a caller is detected before the timer T1 counts down to "0", the decrement in the timer T1 is stopped.

On the caller side, at the same time when receiving the ANSam signal, decrement of time (e.g. 35 seconds) set in the timer T1 provided from the facsimile 12 starts. If the timer T1 counts down to "0", the MODEM produces an interrupt to the DTE side, thereby gives a notice of abnormal. However, a JM signal from the receiver side is detected before the timer T1 counts down to "0", the decrement in the timer T1 is stopped.

It is possible to start the decrements on both sides, i.e. the caller side and receiver side, at the same time when the terminal is linked up to the telephone line.

Second, a timer T2 works as follows: On the receiver side, at the same time when the transmitting of NSF, CSI and DIS signals ends, the decrement of time (e.g. 6 seconds) set in the timer T2 provided from the DTE side starts. If the timer T2 counts down to "0", the MODEM produces an interrupt, thereby gives a notice of abnormal. However, before the timer T2 counts down to "0", if signals to be appeared TSI and DCS signals could be detected from an address byte to control byte according to HDLC format, then the decrement of timer T2 is stopped and returned to its original time, thereby an interrupt of producing abnormality can be avoided. As explained above, this invention only gives a notice that an abnormality is produced. When an operation is normal, the DTE needs not to be noticed of normality, which does not bother the procedure. Therefore, the method such as a notice is given only when an abnormality occurs, can reduce the load on the facsimile controller 12.

On the caller side, at the same time when transmitting of TSI and DCS signals ends, the decrement of time (e.g. 6 seconds) set in the timer T2 provided from the DTE side starts. If the timer T2 counts down to "0", the MODEM produces an interrupt to the DTE side, thereby gives a notice of abnormal. However, before the timer T2 counts down to "0", if a signal to be appeared CFR signal would be detected from address to control bytes following HDLC format, the decrement of the timer T2 stops and returns to its original time, thereby interrupt of abnormal can be avoided.

The above embodiment handles the timer T2 put in just after Phase B moving from Phase A. Regarding control signals including MPS signal between pages, EOP and MCF signals in Phase B passing through Phase C, the DTE side can monitor the timer 2 with ease by the same method.

## Claims

1. A modulator and demodulator, MODEM (11), for performing data-communication to and from a data terminal equipment, DTE (12), comprising:
a) a memory means (114) for storing an object program about a process procedure;
b) a switching means for switching a mode in the unit of a prescribed process-procedure;
c) a control means for executing a process procedure corresponding to the mode just in operation
**characterised in that** the MODEM further comprises:
a timer means adapted to monitor a transition time between end ended process procedure and the starting of a next process procedure, and said MODEM is adapted to start the process of said specified mode based on the instruction set by the DTE as well as to monitor the transition time by using said timer means, and to execute the next specified mode when said timer means times out.

2. The MODEM of claim 1 wherein said memory means has areas adapted to store data from a data terminal equipment, DTE, said areas are corresponding to each mode, and when said switching means switches a mode, said control means is adapted to store the data corresponding to the next mode in a different area from the area which stores the data corresponding to the previous mode.

3. The MODEM of claim 1 wherein said memory means has a first area adapted to store a command from a data terminal equipment, DTE, and a second area adapted to store a data from the DTE in pairs corresponding to each mode, said control means is adapted to transmit the data stored in said second area of said memory means to a line while inputting a command for storing from the DTE to the first area corresponding to second area, and when completing the transmitting of the data stored in the said second data, said control means is adapted to judge based on the command stored in said first area whether the transmitting of the data from said second area is stopped or not.

4. The MODEM of claim 1 wherein said memory means has a plurality of banks (0,1,2,3), and also has data storing areas for each mode, which data storing areas store the data from a data terminal equipment, DTE, in the unit of frame into said banks.

5. The MODEM of claim 1 wherein said memory means has a plurality of banks, command areas and status areas both corresponding to each bank, which command area are adapted to store information about an operation instruction, and which status area are adapted to store information showing buffer status.

6. The MODEM of claim 5, wherein the control means is adapted to provide an error check to the received data from the line, and when an error is detected, only the result of "data-error" is written into the status area, yet error data is cancelled and not stored in the proper bank of the data storing area.

7. The MODEM of claim 5 wherein the information showing buffer status includes either a Data Full/Empty display or the information identifying occurrences of abort and error.

8. The MODEM of claim 1 further including an analysis means for analysing a received signal, and a mode switching means for switching a mode when said analysis means detects a specified signal.

9. The MODEM of claim 8, wherein said analysis means is adapted to deframe a received data-frame and is adapted to analyse the data-frame, and when the analysis tells that the data-frame is an RCP, return to control for partial page, frame, a mode is adapted to switch from a main-channel-receiving-mode to a control-channel-mode.

10. The MODEM of claim 8 wherein when said analysis means tells that a control-channel-ending-signal comprising a special pattern never produced during data transmitting is detected, the mode is adapted to switch from the control-channel-mode to main-channel-receiving-mode.

11. The MODEM of claim 1 further including
a) a modulating means (612) for outputting a modulated signal (612a), to the line,
b) a demodulating means (614) for outputting a demodulated signal (614R,614I) from a received signal (614a) fed from the line,
c) an error counting means (618) for counting errors of said demodulated signal,
d) a specifying means (615) for specifying an acceptable maximum error volume (620b), and
e) a control means (620) which has said modulating means adapted to transmit a retraining signal to the line when an error volume counted by said error counting means exceeds said acceptable maximum error volume.

12. The MODEM of claim 11, wherein said acceptable maximum error volume is specified by the DTE.

13. The MODEM of claim 1 further including
a) a timer means for starting the transmitting of a specified signal as well as counting a specified time,
b) a reset means for resetting said timer means when a response signal to said specified signal is detected from the line during the specified time, and
c) a notifying means for notifying an abnormality to the DTE when said response signal is not detected from the line during the specified time.

14. A data communication equipment comprising a data terminal equipment, DTE (12), and a modulator and demodulator, MODEM (11), linked up with said DTE via a communication line, the MODEM including:
a) a memory means (114) storing an object program about a process procedure,
b) a switching means for switching a mode in a unit if prescribed process-procedure in response to the execution of said object program, and
c) a control means for executing a process procedure,
**characterised in that** the MODEM further comprises:
a timer means adapted to monitor a transition time between the ended process procedure and the starting of a next process procedure, and said MODEM is adapted to start the process of said specified mode based on the instruction set by the DTE as well as to monitor the transition time by using said timer means, and to execute the next specified mode when said timer means times out.

## Patentansprüche

1. Modulator und Demodulator, MODEM (11), zum Duchführen einer Daten-Kommunikation zu einem Datenterminalgerät, DTE (12), und davon, mit:
a) einer Speichereinrichtung (114) zum Speichern eines Objekt-Programms über einen Bearbeitungsvorgang;
b) einer Umschalteinrichtung zum Umschalten eines Modus in der Einheit eines vorgeschriebenen Bearbeitungsvorgangs;
c) einer Steuereinrichtung zum Ausführen eines Bearbeitungsvorgangs entsprechend zu dem Modus, der gerade in Betrieb ist,
**dadurch gekennzeichnet, dass** das MODEM weiterhin aufweist:
eine Zeitgebereinrichtung, angepasst so, um eine Übergangszeit zwischen einem Ende eines beendeten Bearbeitungsvorgangs und dem Beginn eines nächsten Bearbeitungsvorgangs zu überwachen, und wobei das MODEM so angepasst ist, um die nächste Bearbeitung des spezifizierten Modus basierend auf dem Anweisungssatz durch das DTE zu beginnen ebenso wie die Übergangszeit unter Verwendung der Zeitgebereinrichtung zu überwachen, und um den nächsten, spezifizierten Modus auszuführen, wenn die Zeitgebereinrichtung abläuft.

2. MODEM nach Anspruch 1, wobei die Speichereinrichtung Bereiche besitzt, die so angepasst sind, um Daten von einem Daten-Terminal-Gerät, DTE, zu speichern, wobei die Bereiche jedem Modus entsprechen, und wenn die Umschalteinrichtung einen Modus umschaltet, ist die Steuereinrichtung so angepasst, um die Daten entsprechend zu dem nächsten Modus in einem unterschiedlichen Bereich gegenüber dem Bereich, der die Daten entsprechend zu dem vorherigen Modus speichert, zu speichern.

3. MODEM nach Anspruch 1, wobei die Speichereinrichtung einen ersten Bereich, angepasst so, um einen Befehl von einem Daten-Terminal-Gerät, DTE, zu speichern, und einen zweiten Bereich, angepasst so, um Daten von dem DTE in Paaren entsprechend zu jedem Modus zu speichern, besitzt, wobei die Steuereinrichtung so angepasst ist, um die Daten, gespeichert in dem zweiten Bereich der Speichereinrichtung, zu einer Leitung zu übertragen, während ein Befehl zum Speichern von dem DTE zu dem ersten Bereich entsprechend zu einem zweiten Bereich eingegeben wird, und wenn die Übertragung der Daten, gespeichert in dem zweiten Bereich, abgeschlossen ist, ist die Steuereinrichtung so angepasst, um, basierend auf dem Befehl, gespeichert in dem ersten Bereich, zu beurteilen, ob das Übertragen der Daten von dem zweiten Bereich angehalten ist oder nicht.

4. MODEM nach Anspruch 1, wobei die Speichereinrichtung eine Mehrzahl von Bänken (0,1,2,3) besitzt und auch Datenspeicherbereiche für jeden Modus besitzt, wobei die Datenspeicherbereiche die Daten von einem Daten-Terminal-Gerät; DTE, in der Einheit eines Frame in die Bänke hinein speichern.

5. MODEM nach Anspruch 1, wobei die Speichereinrichtung eine Mehrzahl von Bänken,- Befehl-Bereichen und Status-Bereichen, beide entsprechend zu jeder Bank, besitzt, wobei der Befehl-Bereich so angepasst ist, um Informationen über einen Operationsbefehl zu.speichern, und wobei der Status-Bereich so angepasst ist, um informationen zu speichern, die einen Puffer-Status darstellen.

6. MODEM nach Anspruch 5, wobei die Steuereinrichtung so angepasst ist, um eine Fehlerprüfung für die empfangenen Daten von der Leitung zu schaffen, und wenn ein Fehler erfasst ist, wird nur das Ergebnis des "Daten-Fehlers" in den Status-Bereich hinein geschrieben, wobei dennoch Fehler-Daten aufgehoben werden und nicht in die passende Bank des Datenspeicherbereichs gespeichert werden.

7. MODEM nach Anspruch 5, wobei die Informationen, die-einen Puffer-Status darstellen, entweder eine Daten-Full/Empty-Anzeige oder die Informationen, die das Auftreten einer Aussonderung und eines Fehlers identifizieren, umfassen.

8. MODEM nach Anspruch 1, das weiterhin eine Analyseeinrichtung zum Analysieren eines empfangenen Signals und eine Modus-Umschalteinrichtung zum Umschalten eines Modus, wenn die Analyseeinrichtung ein spezifiziertes Signal erfasst, aufweist.

9. MODEM nach Anspruch 8, wobei die Analyseeinrichtung so angepasst ist, um einen empfangenen Daten-Frame zu entstrukturieren, und so angepasst ist, um den Daten-Frame zu analysieren, und wenn die Analyse ergibt, dass der Daten-Frame ein RCP, Rückkehr zu einer Steuerung für eine Teil-Seite (return to control for partial page), -Frame ist, wird ein Modus angewandt, um einen Hauptkanal-Empfangs-Modus zu einem Steuerkanal-Modus umzuschalten.

10. MODEM nach Anspruch 8, wobei dann, wenn die Analyseeinrichtung ergibt, dass ein Steuerkanal-Endsignal, das ein spezielles Muster, das niemals während einer Datenübertragung erzeugt ist, erfasst ist, der Modus so angepasst wird, um von dem Steuerkanal-Modus zu dem Hauptkanal-Empfangsmodus umzuschalten.

11. MODEM nach Anspruch 1, das weiterhin umfasst:
a) eine Modulationseinrichtung (612) zum Ausgeben eines modulierten Signals (612a) zu der Leitung,
b) eine Demodulationseinrichtung (614) zum Ausgeben eines demodulierten Signals (614R, 6141) von einem empfangenen Signal (614a), zugeführt von der Leitung,
c) eine Fehlerzähleinrichtung (618) zum Zählen von Fehlern des demodulierten Signals,
d) eine spezifizierende Einrichtung (615) zum Spezifizieren eines akzeptabeln, maximalen Fehlervolumens (620b), und
e) eine Steuereinrichtung (620), die die Modulationseinrichtung besitzt, angepasst so, um ein Rückhaltesignal zu der Leitung zu senden, wenn ein Fehlervolumen, gezählt durch die Fehlerzähleinrichtung, das akzeptierbare, maximale Fehlervolumen übersteigt.

12. MODEM nach Anspruch 11, wobei das akzeptierbare, maximale Fehlervolumen durch das DTE spezifiziert ist.

13. MODEM nach Anspruch 1, das weiterhin umfasst:
a) eine Zeitgebereinrichtung zum Starten des Sendens eines spezifizierten Signals ebenso wie zum Zählen einer spezifizierten Zeit;
b) eine Rücksetzeinrichtung zum Zurücksetzen der Zeitgebereinrichtung, wenn ein Antwortsignal auf das spezifizierte Signal von der Leitung während der spezifizierten Zeit erfasst ist, und
c) eine Hinweiseinrichtung zum Hinweisen auf eine Abnormalität zu der DTE, wenn das Antwortsignal nicht von der Leitung während der spezifizierten Zeit erfasst ist.

14. Datenkommunikationsgerät, das ein Daten-Terminal-Gerät, DTE (12), und einen Modulator und Demodulator, MODEM (11), verbunden mit dem DTE über eine Kommunikationsleitung, aufweist, wobei das MODEM umfasst:
a) eine Speichereinrichtung (114), die ein Objektprogramm über einen Bearbeitungsvorgang speichert,
b) eine Umschalteinrichtung zum Umschalten eines Modus in einer Einheit, falls in einem Bearbeitungsvorgang in Abhängigkeit der Ausführung des Objektprogramms vorgeschrieben, und
c) eine Steuereinrichtung zum Ausführen eines Bearbeitungsvorgangs,
**dadurch gekennzeichnet, dass** das MODEM weiterhin aufweist:
eine Zeitgebereinrichtung, angepasst so, um eine Übergangszeit zwischen dem beendeten Bearbeitungsvorgang und dem Beginn eines nächsten Bearbeitungsvorgangs zu überwachen, und wobei das MODEM so angepasst ist, um die Bearbeitung des spezifizierten Modus basierend auf der Anweisung, eingestellt durch das DTE, zu beginnen, ebenso wie die Übergangszeit unter Verwendung der Zeitgebereinrichtung zu überwachen, und um den nächsten, spezifizerten Modus auszuführen, wenn die Zeitgebereinrichtung abläuft.

## Revendications

1. Un modulateur et démodulateur, ou MODEM (11) pour effectuer une transmission de données vers un équipement terminal de données, DTE (12), et à partir de celui-ci, comprenant :
a) un moyen de mémoire (114) pour stocker un programme objet concernant une procédure de traitement;
b) un moyen de changement pour changer un mode par unité d'une procédure de traitement prescrite;
c) un moyen de commande pour exécuter une procédure de traitement correspondant au mode particulier qui est mis en oeuvre
**caractérisé en ce que** le MODEM comprend en outre :
un moyen temporisateur adapté pour contrôler un temps de transition entre la fin d'une procédure de traitement terminée et le début d'une procédure de traitement suivante, et ce MODEM est adapté pour commencer le traitement du mode spécifié sur la base de l'instruction fixée par le DTE, ainsi que pour contrôler le temps de transition en utilisant le moyen temporisateur, et pour exécuter le mode spécifié suivant lorsque le moyen temporisateur arrive à expiration.

2. Le MODEM de la revendication 1, dans lequel le moyen de mémoire a des zones adaptées pour stocker des données provenant d'un équipement terminal de données, DTE, ces zones correspondant à chaque mode, et lorsque le moyen de changement change un mode, le moyen de commande est adapté pour stocker les données correspondant au mode suivant dans une zone différente de la zone qui stocke les données correspondant au mode précédent.

3. Le MODEM de la revendication 1, dans lequel le moyen de mémoire a une première zone adaptée pour stocker un ordre provenant d'un équipement terminal de données, DTE, et une seconde zone adaptée pour stocker une donnée provenant du DTE, en paires correspondant à chaque mode, le moyen de commande est adapté pour émettre vers une ligne les données stockées dans la seconde zone du moyen de mémoire, tout en recevant en entrée un ordre provenant du DTE, commandant le stockage dans la première zone correspondant à la seconde zone, et au moment de l'achèvement de l'émission des données stockées dans les secondes données, le moyen de commande est adapté pour juger, sur la base de l'ordre stocké dans la première zone, si l'émission des données à partir de la seconde zone est arrêtée ou non.

4. Le MODEM de la revendication 1, dans lequel le moyen de mémoire a une multiplicité de bancs (0, 1, 2, 3), et a également des zones de stockage de données pour chaque mode, ces zones de stockage de données stockant dans les bancs, en unité de trame, les données qui proviennent d'un équipement terminal de données, DTE.

5. Le MODEM de la revendication 1, dans lequel le moyen de mémoire a une multiplicité de bancs, des zones d'ordre et des zones d'état correspondant toutes deux à chaque banc, ces zones d'ordre étant adaptées pour stocker de l'information concernant une instruction d'opération, et ces zones d'état étant adaptées pour stocker de l'information montrant un état de tampon.

6. Le MODEM de la revendication 5, dans lequel le moyen de commande est adapté pour accomplir un contrôle d'erreur sur les données reçues à partir de la ligne, et lorsqu'une erreur est détectée, seulement le résultat "erreur de données" est écrit dans la zone d'état, tandis que des données erronées sont annulées et ne sont pas stockées dans le banc approprié de la zone de stockage de données.

7. Le MODEM de la revendication 5, dans lequel l'information montrant l'état de tampon comprend soit une visualisation d'état plein / vide pour les données, soit l'information identifiant des cas d'abandon et d'erreur.

8. Le MODEM de la revendication 1, incluant en outre un moyen d'analyse pour analyser un signal reçu, et un moyen de changement de mode pour changer un mode lorsque le moyen d'analyse détecte un signal spécifié.

9. Le MODEM de la revendication 8, dans lequel le moyen d'analyse est adapté pour désassembler une trame de données reçue, et est adapté pour analyser la trame de données, et lorsque l'analyse indique que la trame de données est une trame RCP, c'est-à-dire retour à la commande de page partielle, un mode est adapté pour être changé d'un mode de réception de canal principal à un mode de canal de commande.

10. Le MODEM de la revendication 8, dans lequel lorsque le moyen d'analyse indique qu'un signal de fin de canal de commande comprenant une configuration spéciale qui n'est jamais produite pendant la transmission de données est détecté, le mode est adapté pour passer du mode de canal de commande au mode de réception de canal principal.

11. Le MODEM de la revendication 1, incluant en outre
a) un moyen de modulation (612) pour émettre sur la ligne un signal modulé (612a),
b) un moyen de démodulation (614) pour émettre un signal démodulé (614R, 6141) à partir d'un signal reçu (614a) provenant de la ligne,
c) un moyen de comptage d'erreurs (618) pour compter des erreurs du signal démodulé,
d) un moyen de spécification (615) pour spécifier un volume d'erreurs maximal acceptable (620b), et
e) un moyen de commande (620) faisant en sorte que le moyen de modulation soit adapté pour émettre sur la ligne un signal de réapprentissage lorsqu'un volume d'erreurs compté par le moyen de comptage d'erreurs dépasse le volume d'erreurs maximal acceptable.

12. Le MODEM de la revendication 11, dans lequel le volume d'erreurs maximal acceptable est spécifié par le DTE.

13. Le MODEM de la revendication 1, incluant en outre
a) un moyen temporisateur pour commencer l'émission d'un signal spécifié ainsi que le comptage d'un temps spécifié,
b) un moyen de restauration pour restaurer le moyen temporisateur lorsqu'un signal de réponse au signal spécifié est détecté à partir de la ligne pendant le temps spécifié, et
c) un moyen de notification pour notifier une anomalie au DTE lorsque le signal de réponse n'est pas détecté à partir de la ligne pendant le temps spécifié.

14. Un équipement de transmission de données comprenant un équipement terminal de données, DTE (12), et un modulateur et démodulateur, MODEM (11), relié au DTE au moyen d'une ligne de communication, le MODEM incluant :
a) un moyen de mémoire (114) qui stocke un programme objet concernant une procédure de traitement;
b) un moyen de changement pour changer un mode en une unité de procédure de traitement prescrite, en réponse à l'exécution du programme objet, et
c) un moyen de commande pour exécuter une procédure de traitement,
**caractérisé en ce que** le MODEM comprend en outre :
un moyen temporisateur adapté pour contrôler un temps de transition entre la procédure de traitement terminée et le début d'une procédure de traitement suivante, et le MODEM est adapté pour commencer le traitement du mode spécifié sur la base de l'instruction donnée par le DTE, ainsi que pour contrôler le temps de transition en utilisant le moyen temporisateur, et pour exécuter le mode spécifié suivant lorsque le moyen temporisateur arrive à expiration.
